# EUROPEAN PATENT APPLICATION

(11) **EP 2 116 929 A1**
(43) Date of publication of application: **11.11.2009**
(21) Application number: 09159722.9
(22) Date of filing: 08.05.2009
(51) Int. Cl.: G06F 3/12

(54) **Job editor interface based on dynamic device capabilities**

(30) Priority: 09.05.2008 US 118203
(71) Applicant: Ricoh Company, Limited, Ohta-ku Tokyo 143-8555 (JP)
(72) Inventor: Conescu, Ronald Marc, Cupertino, CA 95014 (US); Le, Loc T., Cupertino, CA 95014 (US)
(74) Representative: Schwabe - Sandmair - Marx

(57) **Abstract**

A graphical job editor (202) for creating jobs in a multi-layer workflow architecture for a print shop is disclosed. The graphical job editor presents to a user a graphical representation of every device and activity available in the print shop as provided by the service bus layer of the workflow architecture. Further, the present information (1101) regarding the capabilities of each such device and activity so presented may then be defined by the user through simple, graphical user interface objects and techniques. The graphical job editor uses the present information in the device capabilities presented by the service bus. The present device capability information of each device and activity in a job may be updated as each activity is added to the job being defined to thus assure creation of a valid job that may be processed in a particular workflow architecture.

## Description

### FIELD OF THE INVENTION

The invention relates to the field of print shops and, in particular, to a graphical editor for creating jobs based on device capabilities operable as a standalone editor or in a workflow architecture for a print shop having a multi-layer platform for handling workflows in the print shop.

### BACKGROUND OF THE INVENTION

A print shop generally refers to a workplace where printing is performed, typically to provide commercial printing services. Customers use print shops to print catalogs, manuals, books, magazines, brochures, etc. Print shops may be large production print shops that implement large inline printers (i.e., continuous feed printers) to print long run-length jobs for a few customers. For example, a large production print shop may print customer bills for a credit card company. Most print shops are smaller shops that print short run-length jobs for many different customers. For example, a small print shop may print magazines, catalogs, books, brochures, etc, for a variety of different customers.

Because most small print shops service many different customers, the small print shops have to be able to change their workflow and system configuration to handle different jobs. A workflow generally refers to some organization of resources, devices, and roles in a print shop for providing printing services. For example, a small print shop may include a black and white printer, a color printer, a cutting device, and a binding device. For a workflow of one customer, the print shop may use the color printer and the cutting device to generate brochures for this customer. For a workflow of another customer, the print shop may use the color printer, the black and white printer, the cutting device, and the binding device to generate books for this customer. Due to the needed flexibility of the small print shops and the cost of new, large inline devices, many of the devices in the print shop are either offline devices (requiring human configuration and control) or near-line devices (accepting electronic configuration, but still requiring human control) as opposed to inline devices (which can be both configured and controlled electronically). Thus, to switch configurations quickly to handle different types of jobs, the small print shop does not need to re-configure an inline system, but may instead use the offline devices or near-line devices.

Many print shops, but not all, use software to help manage the flow of work throughout the shop. Some shops have a single software system that is capable of representing every activity, situation, and device in the shop, and use the software for that purpose; other shops use separate software systems to represent different parts of their shops; and some shops have no software at all, managing their devices and activities physically, or via printed instructions. For those shops which have devices or activities which can be and are in fact controlled by software, we can consider the workflow architecture of a print shop to be the platform upon which a job is created or generated, and then subsequently executed on the devices in the print shop. Among such shops, the typical workflow architecture as presently practiced comprises software that is run on one or more computers in the print shop. Such software is customized for each print shop based on the particular devices used in the print shop and the type of jobs that will be handled in the print shop. For instance, if a print shop has two printers from two different vendors and a cutting device from another vendor, then the customized software for that print shop is programmed based on those specific devices being used.

The customized software allows a print shop operator to create one or more jobs, manage the jobs, schedule the jobs, etc. To provide such functionality, the operating parameters, capabilities, and other information for each of the devices (i.e., the printers, cutting devices, binding devices, etc) in the print shop are defined in the customized software. The customized software may provide a job editor that displays the devices in the print shop and their associated capabilities to the print shop operator. The print shop operator may then create a job by selecting one or more devices in the print shop, and by defining the activities to be executed by each of the devices for the job. For instance, the print shop operator may first select a color printer to print a particular printable file (e.g., a PDF file) to generate printed pages. The print shop operator may then select a cutting device to put one or more creases in the printed pages to generate brochures.

When the job is created through the job editor, the customized software transmits messages to the devices selected for the job. The messages indicate what printable files are needed for the job (if any), and what activity or activities should be executed on that particular device. Messages such as these are often referred to as job tickets.

It is an ongoing challenge to create jobs based on a simple, intuitive graphical user interface and also to create jobs that are assured to be capable of being processed in the particular workflow processing application. For example, some present job editors in workflow architectures for print shops or as standalone job editors are difficult to use. They may, for example, define jobs in terms of relatively cryptic or obscure, textual interface oriented, command language syntax. Further, for example, some present job editors in workflow architectures do not account for changes in the capabilities of devices as they may change based on the activity in the workflow environment or based on the particular job's sequences of activities/devices selected by the user. For example, a user may define a sequence of devices/activities in a job such that the output of a particular device/activity renders the output material or information unusable as input to the next device/activity. Present job editors may not detect such erroneous configurations of a job. Thus the user of present job editors may generate a job that is not capable of being processed in the print shop in its present state of operation with a particular selected sequence of devices/activities.

### SUMMARY OF THE INVENTION

Embodiments of the present invention solve the above and other related problems by providing a graphical job editor. The graphical job editor also provides dynamically updated information regarding the devices and activities available for defining a job with the graphical editor. The graphical job editor may be operable in a workflow architecture such as described in the Architecture patent and as described herein. Such a workflow architecture includes a workflow front end as one layer, a service bus as another layer, and service providers as another layer. The workflow front end represents the layer that provides the interface to print shop operators or other users. The workflow front end may provide the graphical job editor features and aspects hereof for creating jobs as well as a workflow controller for managing the execution of jobs, etc. The editor uses a description of device capabilities of each device to interact with the user to create a job. Device capabilities for an identified device describe a set of activities that the device can perform; each activity describes a set of resources it requires and resources it produces. Each resource can have an internal, hierarchical structure, every element of which is defined and described by a set of named attributes (numbers, text, and so on). The editor also includes a user interface operable to display a graphical representation of each identified device and operable to receive user input defining a job comprising a plurality of activities from the displayed devices. The editor further includes a linking module coupled to the user interface to receive the job and operable to verify that the output resource of a device activity comports with the input resource of the next device activity in the defined order. The editor enables the user to organize any number of activities into a sequence by connecting the output(s) from one or more activities to the input(s) of one or more other activities; an input can be connected to an output as long as the two items are of the same type. For example, a stack of paper output from one activity may be used as input to another activity if that second activity also expects to receive a stack of paper as an input; a file output from one activity may be used as input to another activity if that second activity also expects to receive a file as an input. In this way, all activities in a job can be arranged into an order of execution, described by the activities' dependencies on each others' resources. A job generator associated with the editor then generates and outputs a job ticket by arranging the activities into a well-defined format.

The invention may include other exemplary embodiments described below.

### BRIEF DESCRIPTION OF THE DRAWINGS

The same reference number represents the same element or same type of element on all drawings.

FIG. 1 illustrates a workflow architecture for a print shop in an exemplary embodiment of the invention.

FIG. 2 illustrates a workflow front end in an exemplary embodiment of the invention.

FIG. 3 illustrates a service bus in an exemplary embodiment of the invention.

FIG. 4 illustrates a service provider in an exemplary embodiment of the invention.

FIG. 5 is a flowchart illustrating a method of creating and executing a job in an exemplary embodiment of the invention as applied to print shop job processing.

FIG. 6 illustrates another workflow architecture for a print shop in an exemplary embodiment of the invention.

FIG. 7 illustrates messages exchanged between a service provider for a printer and a service bus in an exemplary embodiment of the invention.

FIG. 8 illustrates messages exchanged between a service provider of a binder and a service bus in an exemplary embodiment of the invention.

FIG. 9 illustrates messages exchanged between a service provider for a cutter and a service bus in an exemplary embodiment of the invention.

FIG. 10 illustrates a computer system operable to execute computer readable medium embodying programmed instructions to perform desired functions in an exemplary embodiment of the invention.

FIG. 11 illustrates a graphical job editor system in an exemplary embodiment of the invention.

FIG. 12 illustrates and exemplary display screen of the job editor for displaying available devices for a user to select to define a job in an exemplary embodiment of the invention.

FIG. 13 illustrates and exemplary display screen of the job editor for displaying device capabilities of a selected device for a user to provide values to define a job in an exemplary embodiment of the invention.

FIGS. 14 and 15 are flowcharts describing exemplary methods for operation of a graphical job editor in an exemplary embodiment of the invention.

### DETAILED DESCRIPTION OF THE PRESENT INVENTION

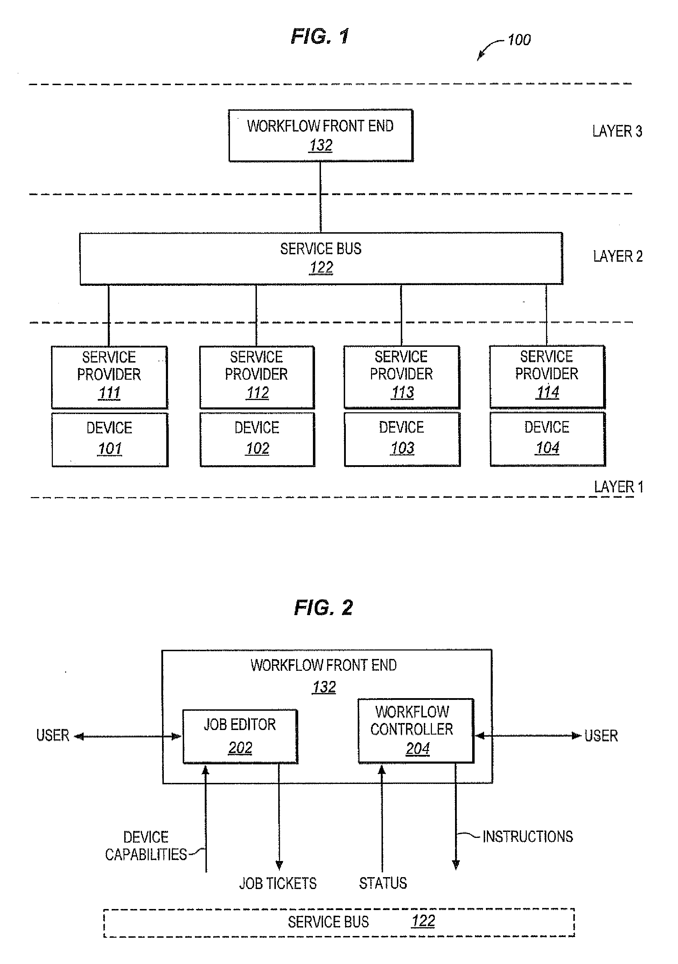

FIGS. 1-15 and the following description depict specific exemplary embodiments of the present invention to teach those skilled in the art how to make and use the invention. For the purpose of this teaching, some conventional aspects of the invention have been simplified or omitted. Those skilled in the art will appreciate variations from these embodiments that fall within the scope of the present invention. Those skilled in the art will appreciate that the features described below can be combined in various ways to form multiple variations of the present invention. As a result, the invention is not limited to the specific embodiments described below, but only by the claims and their equivalents.

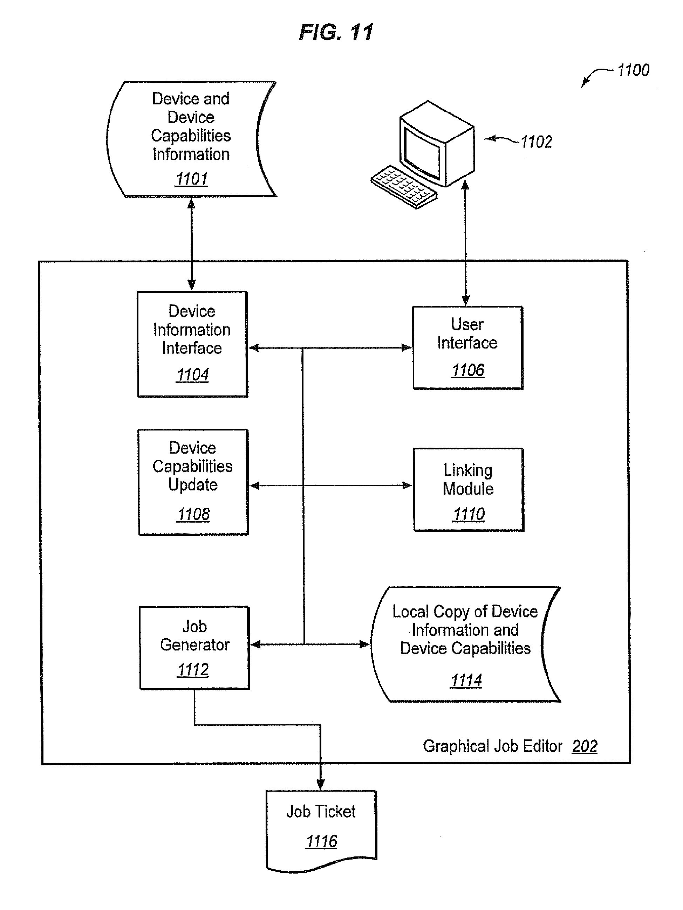

Embodiments provided herein describe systems and methods for creating jobs to be processed, such as in a print shop, using a graphical job editor that presents near real-time capabilities of each device/activity in the print shop. The systems and methods may be implemented in a specific workflow architecture used in the print shop. Thus, the workflow architecture is described below and in FIGS. 1-10. The systems and methods for generating jobs in this architecture using the graphical job editor hereof, and possibly other architectures, are then described herein below with reference to FIGS. 11-15. Workflow Architecture

FIG. 1 illustrates a workflow architecture 100 in an exemplary embodiment incorporating a graphical job editor of the invention. Though a workflow system may be applied in any number of useful applications to generate a job as a sequence of activities, the presentation herein below discusses an exemplary embodiment of the invention as applied in the context of a print shop. In such a print shop, jobs are generated as a sequence of activities to produce a desired printed output. The print shop includes a plurality of devices 101-104 (also sometimes referred to herein as "services") that are each adapted to perform print shop-type activities. For example, devices 101-104 may perform printing activities, cutting activities, binding activities, and/or other types of print shop activities. Activities are often performed by a corresponding automated device as "on-line" or "inline" activities performed by a corresponding device. In addition, activities may also be performed entirely manually by a human operator as "offline activities" (performed by a human "device") or as a semi-automated activity referred to as a "near-line" activity performed by a device or computer with required human interaction. Thus the term "activity" as used herein is intended to encompass inline activities, near-line activities, or offline devices (or humans). Those skilled in the art will appreciate that a print shop may include more or less devices 101-104 as desired and each device may perform any number of activities.

Workflow architecture 100 is implemented as a multi-layer platform in this embodiment. The first layer (Layer 1) is the device-level layer. Layer 1 is comprised of one or more service providers 111-114. Service providers 111-114 are each associated with a device 101-104 in the print shop. A service provider comprises any system, software, or module that is operable to store and/or report capabilities of the devices 101-104. Device capabilities comprise any data or information that describes or indicates the ability of a device to perform actions or services in the print shop. The device capabilities may define the input for a device (i.e., an input device capability), an output for a device (i.e., an output device capability), and/or any operating parameters or device configuration used to perform an action or a service. A service provider may also be operable to perform one or more activities using its associated device. For example, if a service provider is associated with a printer, then the service provider may be operable to execute a printing activity on the printer.

A service provider may also be operable to execute one or more activities using its associated device. For example, if a service provider is associated with a printer, then the service provider may be operable to execute a printing activity on the printer.

The second layer (Layer 2) of the architecture 100 is a service bus 122. A service bus comprises any system, software, or module that is operable to store or integrate device capabilities for a print shop, and execute (manage) jobs in the print shop. A job comprises any task that defines one or more activities to be performed in a print shop. For example, a job may define a printing activity, a cutting activity, a binding activity, etc.

The third layer (Layer 3) of the architecture 100 is a workflow front end 132. A workflow front end comprises any system, software, or module that is operable to provide a user interface that allows a print shop operator or another user to create a job. The workflow front end is further operable to provide a user interface that allows a print shop operator or another user to view the status of jobs being executed in service bus 122, and/or to manage the jobs in service bus 122. Although one workflow front end 132 is illustrated in FIG. 1, multiple workflow front ends may be implemented in other embodiments.

FIG. 2 illustrates a workflow front end 132 in an exemplary embodiment of the invention. In this embodiment, workflow front end 132 includes a job editor 202 and a workflow controller 204. Details of an exemplary embodiment of a job editor 202 in accordance with an embodiment of the invention are discussed further herein below with reference to FIGS. 11-15. In general, job editor 202 allows a print shop operator or another user to create jobs. Job editor 202 receives device capabilities of the devices 101-104 in the print shop from service bus 122 (as originally reported by each of service providers 111-114). Job editor 202 provides a user interface that displays the devices and their respective capabilities to the print shop operator. The user interface may comprise a graphical user interface (GUI) or another type of user interaction mechanism that allows a print shop operator to view information and enter instructions. For example, job editor 202 may provide a user interface that lists the devices 101-104 and the capabilities thereof to the print shop operator. Through the user interface, the print shop operator may define a job by selecting particular devices 101-104 and particular activities to be performed by the selected devices 101-104. As an example, the print shop operator may select device 101 to print documents and may select device 102 to put a crease in the documents. Based on the input from the print shop operator in selecting devices and activities, job editor 202 generates a job and transmits the job to the service bus 122 for execution. Job editor 202 may also allow the print shop operator to set or change the configuration of devices 101-104.

One type of job ticket that may be used is a Job Definition Format (JDF) job ticket. A JDF job ticket is in XML format, and describes a job ticket, a message description, and message interchange. A JDF job ticket includes information that enables a device to determine what files are needed as input (if any), where the files are located, and what activities the device should perform. Other messages may be communicated in the workflow architecture 100 as Job Messaging Format (JMF) messages. JMF is part of the JDF specification. A JMF message is in XML format, and allows for communication of events (start, stop, error), status (available, offline, stalled, etc.), results (count, waste, etc.), and other details. The well known JDF standards are created and maintained by The International Cooperation for the Integration of Processes in Prepress, Press and Postpress Organization (CIP4) and are publicly available at www.cip4.org.

Workflow controller 204 provides user interface functions for service bus 122. When a job operator creates jobs through job editor 202, the jobs are transmitted to service bus 122 for execution. Service bus 122 schedules the jobs for execution, and executes the jobs as scheduled. Workflow controller 204 provides a user interface that displays the schedule of jobs to the print shop operator, and also allows the print shop operator to change the schedule of jobs. When a job is executed in service bus 122, workflow controller 204 provides a user interface that displays the status of the job. The print shop operator may also manage the jobs that are being queued or executed in service bus 122.

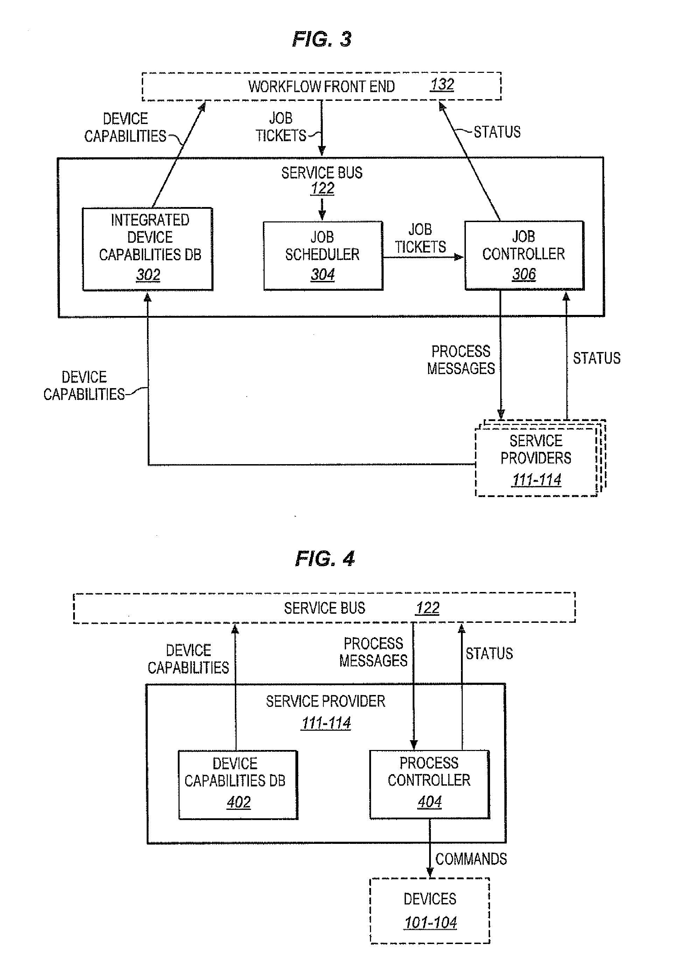

FIG. 3 illustrates a service bus 122 in an exemplary embodiment of the invention. In this embodiment, service bus 122 includes an integrated device capability database 302, a job scheduler 304, and a job controller 306. Integrated device capability database 302 comprises any system, software, or module adapted to receive a report or indication of device capabilities from service providers 111-114, and store the device capabilities of the entire print shop. Integrated device capability database 302 may store the device capabilities for the print shop in a device capability file that represents the entirety of the activities available in the print shop.

Integrated device capability database 302 may be further operable to register or unregister service providers 111-114 as needed or desired. For example, if a device 101-104 (see also FIG. 1) is taken out of service temporarily or permanently, then integrated device capability database 302 may unregister the service provider 111-114 for that device 101-104 while the device is out of service. Or for example, if a particular activity of a device is temporarily unavailable (e.g., a scanning ability of a multi-function device is unavailable), then that activity of that device (e.g., scanning or copying) may be unregistered while other activities (e.g., printing) remain available.

Job scheduler 304 comprises any system, software, or module adapted to receive and store job tickets from workflow front end 132, and schedule the stored job tickets for execution. For example, the received job tickets may be JDF job tickets. Job scheduler 304 may schedule the jobs according to an algorithm (e.g., first in first out), according to instructions from the print shop operator, or according to some other method.

Job controller 306 comprises any system, software, or module adapted to execute a job ticket (or a job defined by the job ticket). When job controller 306 receives a job for execution, job controller 306 is adapted to identify the activities defined in the job, and identify the service providers 111-114 to perform the activities defined in the job. Job controller 306 is also operable to generate process messages that request the identified activities be executed. A process message comprises any type of message that request or instructs a device to perform or execute one or more activities. In one example, the process message is a JDF job ticket. Job controller 306 is further operable to transmit the process messages to the identified service providers 111-114 so that the activities requested in the process messages may be executed.

Job controller 306 is also operable to receive the status of activities of a job. Job controller 306 may modify a job based on the status of one or more of the activities, such as by substituting one activity on a device 101-104 (see also FIG. 1) with a similar activity on another device (e.g., one of the devices 101-104 is unavailable to perform an activity). Job controller 306 may also provide the status of the activities of a job to workflow controller 204 (see FIG. 2) for display to a print shop operator.

FIG. 4 illustrates a service provider 111-114 in an exemplary embodiment of the invention. In this embodiment, service provider 111-114 includes a device capability database 402 and a process controller 404. Device capability database 402 comprises any system, software, or module operable to store device capabilities for a device 101-104 with which it is associated, and to report the device capabilities for a device 101-104 to service bus 122.

The device capabilities for a device 101-104 may be defined in a service provider 111-114 in a variety of ways. For example, the device manufacturer may define the device capabilities for a device according to a format set forth for workflow architecture 100. In another example, the manufacturer or provider of the workflow architecture may define service providers or device capabilities for multiple devices that may be part of a print shop. The appropriate service providers may then be activated if a new device is added to the print shop. In another example, a print shop operator may dynamically define the device capabilities of a device, such as through workflow front end 132.

Process controller 404 comprises any system, software, or module operable to execute one or more activities (e.g., job step activities) on a device 101-104. When process controller 404 receives a process message from service bus 122, process controller 404 is operable to identify the activity or activities to be executed in the process message, and execute the activity or activities using its associated device 101-104. For example, if the process message comprises a JDF job ticket, then process controller 404 processes the JDF job ticket to identify what files are needed as input (if any), where the files are located, and what activities the device should perform. Process controller 404 may then convert the JDF job ticket into device-specific operational commands in the format compatible with its associated device 101-104, and transmit the device-specific operational commands to its associated device 101-104 to execute the activity identified in the JDF job ticket.

Process controller 404 is also operable to monitor the status of activities being performed on its associated device 101-104. Process controller 404 is also operable to report the status of the activities to service bus 122. Process controller 404 may use a JMF message to report the status of the activities to service bus 122.

This multi-layer workflow architecture 100 (see FIG. 1) advantageously provides a flexible platform for a print shop. Because service providers 111-114 are able to report the device capabilities of devices 101-104 to service bus 122, that may, in turn provide them to workflow front end 132, the present or real-time capabilities of the entire print shop are available to the print shop operator when creating a job. Thus, if a new device is added to the print shop, the service provider associated with the new device will report the device capabilities of the new device to service bus 122, and the capabilities of the new device will be available to the print shop operator when creating a job. Similarly, if an existing device 101-104 is changed in the print shop, then the service provider 111-114 associated with the changed device 101-104 will report the new device capabilities to service bus 122, and the capabilities of the changed device 101-104 will be available to the print shop operator when creating a job. Because a service provider of a newly-added device or a changed device can automatically report device capabilities to the service bus, devices can be efficiently added or changed in the print shop.

### Method of Handling a Job

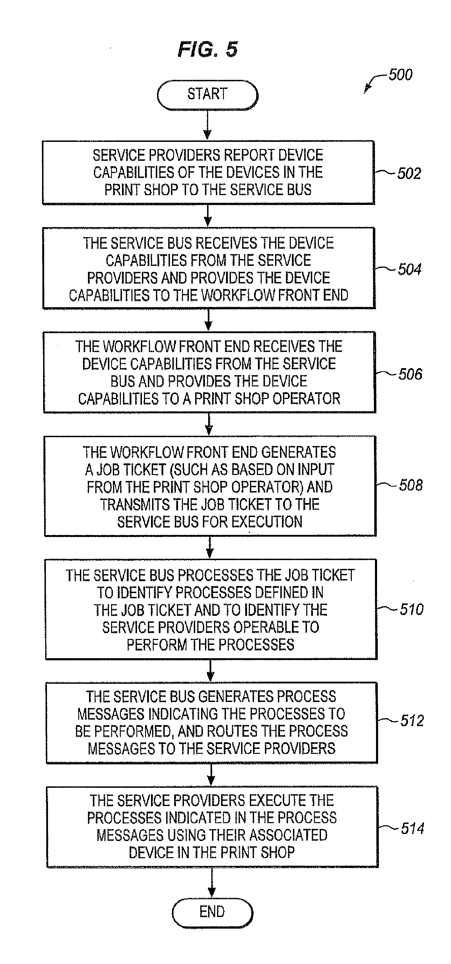

To illustrate how workflow architecture 100 operates in the print shop, FIG. 5 is a flowchart illustrating a method 500 of creating and executing a job in an exemplary embodiment of the invention. The steps of method 500 will be described with reference to workflow architecture 100 in FIG. 1, although method 500 may be performed through other architectures and other devices in other embodiments. The steps of the flowchart in FIG. 5 are not all inclusive and may include other steps not shown.

As previously stated, service providers 111-114 store device capabilities for their associated devices 101-104, such as in device capabilities database 402 (see also FIG. 4). Service providers 111-114 each report the device capabilities of the devices 101-104 to service bus 122 in step 502. Service providers 111-114 may report the device capabilities according to one or more triggers. For instance, service providers 111-114 may report the device capabilities when their associated devices 101-104 are put into operation, or when a change is made to the device 101-104 or its operating parameters. Service providers 111-114 may alternatively report the device capabilities periodically, such as every minute, every hour, etc. Service providers 111-114 may alternatively report the device capabilities responsive to a request by service bus 122.

In step 504, service bus 122 receives the device capabilities from service providers 111-114. Integrated device capabilities database 302 (see also FIG. 3) may then integrate the device capabilities from each of the service providers 111-114 into an integrated device capability file for the print shop. The integrated device capability file represents the entirety of the activities available in the print shop. Integrated device capabilities database 302 stores and maintains the device capabilities for devices 101-104. For example, integrated device capabilities database 302 may periodically query service providers 111-114 to make sure the device capabilities are up to date. Service bus 122 also provides the device capabilities for the devices 101-104 in the print shop to workflow front end 132 in step 504.

In step 506, workflow front end 132 receives the device capabilities from service bus 122, such as in job editor 202 (see also FIG. 2). Job editor 202 then provides a user interface that displays or otherwise provides the device capabilities of the devices 101-104 to a user. This allows the print shop operator or another user to define a job based on the device capabilities. Because the device capabilities indicate the devices 101-104 that are available and the actions or service that devices 101-104 are able to perform, the print shop operator or other user may select one or more of the devices 101-104 and one or more of the activities to be performed by the devices 101-104 as a subset of the device capabilities. Responsive to the input from the print shop operator, job editor 202 generates a job in step 508. Because the job is created based on the device capabilities of devices 101-104 in the print shop, the job is virtually guaranteed to be executable on service bus 122. Workflow front end 132 then transmits the job to service bus 122 also in step 508.

In one alternative, workflow front end 132 may generate a web page that indicates the device capabilities of devices 101-104 in the print shop. The web page generated by workflow front end 132 may be part of an online store provided by the print shop. A customer may then view the web page, and select one or more of the devices 101-104 and one or more of the activities to be performed by the devices 101-104 as a subset of the device capabilities. A job may then be generated at the customer end, or may be generated in job editor 202 based on the selections by the customer. If the job is generated at the customer end, then workflow front end 132 receives the generated job from the customer over a network, such as the internet.

Service bus 122 receives the job, such as in job scheduler 304 (see also FIG. 3). Job scheduler 304 schedules the job according to an algorithm or input from a print shop operator. At some point, job scheduler 304 outputs the job to job controller 306 for execution. Job controller 306 activities the job to identify the activities defined in the job, and to identify the service providers 111-114 operable to perform the activities in step 510. For instance, if the job is in JDF format, then job controller 306 activities the JDF job ticket to identify the activities defined for the job. In step 512, job controller 306 generates process messages indicating the activities to be performed. Job controller 306 may, for each individual activity, generate JDF job tickets indicating what files are needed as input (if any), where the files are located, and what activity (or activities) the service provider 111-114 should perform. Job controller 306 then routes the process messages to service providers 111-114 in step 512.

One or more of the service providers 111-114 receive a process message from service bus 122. Through process controller 404 (see also FIG. 4), the service providers 111-114 that receive a process message execute the activity (or activities) indicated in the process message using its associated device 101-104 in step 514. For example, if the process message is a JDF job ticket, then the service providers 111-114 may convert the JDF job ticket into device-specific operational commands in the format compatible with its associated device 101-104. Service providers 111-114 then transmit the device-specific operational commands to its associated device 101-104 to execute the activity identified in the JDF job ticket.

Service providers 111-114 are each able to identify the status of the activity executed using its associated device 101-104. Service providers 111-114 then transmit the status of the activity to service bus 122. Service bus 122 transmits the status of the activities of the job to workflow front end 132. The status of the activity may be transmitted in workflow architecture 100 in a JMF message. Workflow front end 132, such as through workflow controller 204, then indicates the status of the activities to the print shop operator. The print shop operator may then monitor the status of the entire job.

The print shop operator may manage or modify the job that is being executed in service bus 122. For instance, if one of the devices 101-104 encounters an error or becomes unavailable, then the print shop operator may modify the job to define a new device 101-104 or a new activity. Similarly, service bus 122 may automatically modify the job based on the status of the activities. If one of the devices 101-104 encounters an error or becomes unavailable, then service bus 122 is able to modify the job to replace this device with another device in the print shop to perform the activity. Example

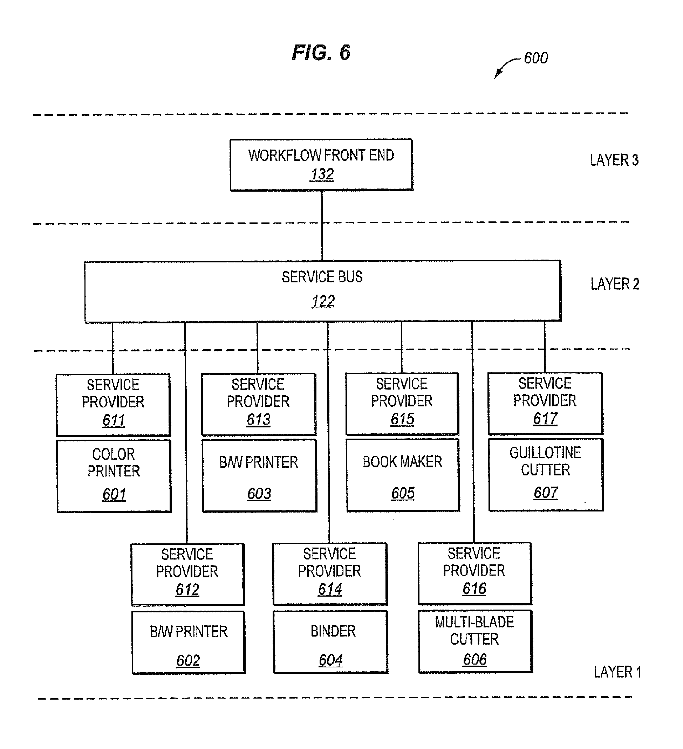

FIGS. 6-9 illustrate an example of handling a particular job in a print shop. The print shop in this example may use a workflow architecture similar to that shown in FIG. 1. FIG. 6 illustrates a workflow architecture 600 for the print shop in an exemplary embodiment of the invention. The print shop in this embodiment includes a color printer 601, a black and white printer 602 from a first vendor, and a black and white printer 603 from a second vendor. The print shop also includes a binder 604 and a book maker 605. The binder 604 and the book maker 605 are offline devices. The print shop also includes a multiple blade cutter 606 and a guillotine cutter 607. Both cutters 606-607 are near-line devices. Those skilled in the art will appreciate that a print shop may include more or less devices as desired.

As with workflow architecture 100 shown in FIG. 1, workflow architecture 600 is implemented as a multi-layer platform having a plurality of service providers 611-617, a service bus 122, and a workflow front end 132. Service providers 611-617 are each associated with a device 601-607 in the print shop. Service provider 611 is associated with color printer 601 and stores the device capabilities for color printer 601. Service provider 612 is associated with black and white printer 602 and stores the device capabilities for black and white printer 602. Service provider 613 is associated with black and white printer 603 and stores the device capabilities for black and white printer 603. Service provider 614 is associated with the binder 604 and stores the device capabilities for binder 604. Service provider 615 is associated with the book maker 605 and stores the device capabilities for book maker 605. Service provider 616 is associated with the multiple blade cutter 606 and stores the device capabilities for cutter 606. Service provider 617 is associated with the guillotine cutter 607 and stores the device capabilities for cutter 607.

At some point during operation, each service provider 611-617 reports the device capabilities for its associated device 601-607 to service bus 122 so that service bus 122 has real-time information on the device capabilities of each of the devices. The device capabilities may be provided in a declarative language, such as Extensible Markup Language (XML). An exemplary device capability definition relating to a printer is discussed below in conjunction with discussion of the graphical job editor.

Service bus 122 receives the device capabilities from the service providers 611-617, and integrates the device capabilities into an integrated device capabilities database. The device capability database represents the entirety of the activities and devices available in the print shop. Service bus 122 then provides an integrated device capabilities file to workflow front end 132, such as responsive to a request from workflow front end 132.

Workflow front end 132, responsive to receiving the integrated workflow capabilities file, provides a user interface that displays or otherwise indicates activities that may be performed using devices 601-607 based on the device capabilities indicated in the integrated device capabilities file. Because the device capabilities indicate the devices 601-607 that are available and the activities that are available, the print shop operator may select one or more of the devices 601-607 and one or more of the activities performed by the devices 601-607 as a subset of the device capabilities. Assume for this embodiment that the print shop operator wants to create a bound instruction book.

To create the instruction book, the print shop operator may first select one of the printers 601-603 to print the instruction book, and may also indicate the printable file to be printed on the selected printer, such as a PDF file. Because the interior pages of the instruction book are in black and white, assume for this example that the print shop operator selects black and white printer 602 through the user interface to print the pages of the instruction book. The instruction book is also to be bound in some manner, so the print shop operator may next select binder 604 or bookmaker 605 through the user interface to bind the pages of the manual. Assume for this example that the print shop operator selects binder 604 through the user interface to bind the printed pages of the instruction book. The desired size of the instruction book may be smaller than the paper stock available in black and white printer 602, so the print shop operator may next select one of the cutters 606-607 to cut or trim the printed pages down to the correct size. Assume for this example that the print shop operator selects guillotine cutter 607 through the user interface to cut the bound, printed pages.

In addition to selecting the black and white printer 602, binder 604, and cutter 607 to perform particular activities, the print shop operator may view the operating parameters (e.g., resources) for these selected activities on the selected devices, and set or change the operating parameters (resources) as desired. For example, the print shop operator may select a particular type of paper stock from black and white printer 602. The print shop operator may set the cutting parameters for cutter 607. The adjustable parameters for each of the activities for each of the devices will be displayed by workflow front end 132 through the user interface.

Responsive to the input from the print shop operator, workflow front end 132 generates a job ticket (e.g., using graphical job editor 202). Because the job is created based on the device capabilities of black and white printer 602, binder 604, and cutter 607, the job is virtually guaranteed to be executable on service bus 122. In this example, the job ticket comprises a JDF job ticket. The JDF job ticket describes the activities that are to be performed by black and white printer 602, binder 604, and cutter 607. The JDF job ticket also includes a location of the PDF file for the instruction book. Workflow front end 132 then transmits the JDF job ticket to service bus 122.

Service bus 122 receives the JDF job ticket, and processes the JDF job ticket to identify the activities defined for the job. Service bus 122 also identifies the service providers 611-617 operable to perform the activities, which are service providers 612, 614, and 617. Service bus 122 then generates another JDF job ticket or re-uses the JDF job ticket for each of the service providers 612, 614, and 617. The JDF job tickets each indicate what files are needed as input (if any), where the files are located, and what activity (or activities) should be performed, and provide any additional information (e.g., resources or parameters) specified either by the user or as default values in the capability description. Service bus 122 then routes a JDF job ticket to service provider 612 (which is associated with black and white printer 602).

Service provider 612 receives the JDF job ticket from service bus 122. The JDF job ticket is written in XML format. For example, the following illustrates an example portion of a JDF job ticket transmitted to service provider 612 which indicates the type of finishing to perform:
<JobTicket>
   <DigitalPrintingParams Collate="Sheet"/>
   <LayoutPreparationParams Sides="TwoSidedFlipX"/> </JobTicket>

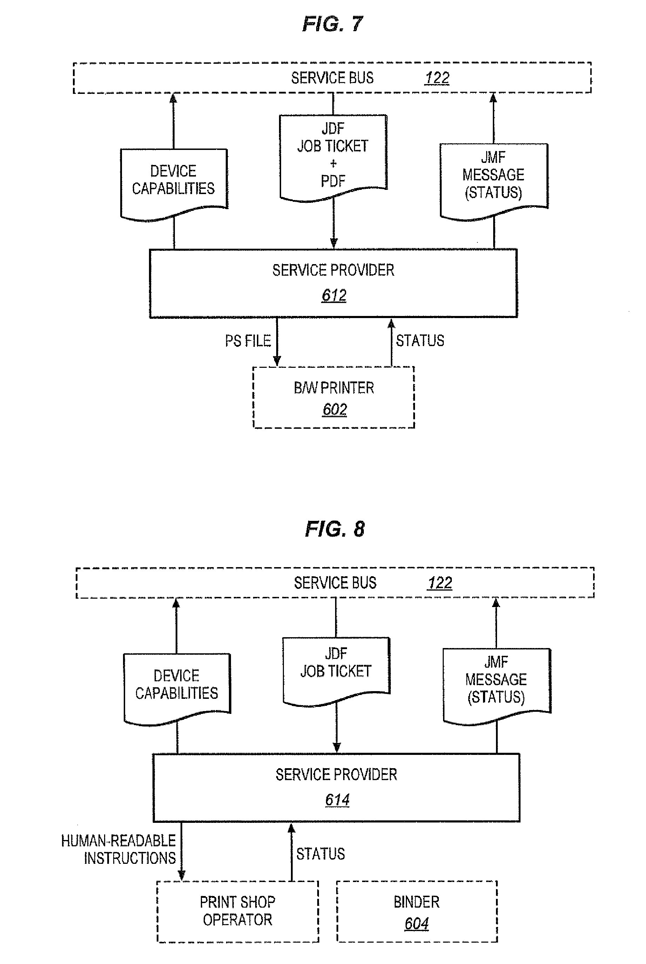

FIG. 7 illustrates the messages exchanged between service provider 612 and service bus 122 in an exemplary embodiment of the invention. Service provider 612 receives the JDF job ticket and the PDF file from service bus 122. The JDF job ticket requests that service provider 612 execute a printing activity on black and white printer 602 to print the PDF file. Thus, service provider 612 converts the JDF job ticket into device-specific operational commands in the format compatible with black and white printer 602. For example, service provider may convert the PDF file and the JDF job ticket into a PostScript (PS) file. Service provider 612 then transmits the PostScript file to black and white printer 602, and black and white printer 602 prints the PostScript file.

Service provider 612 also monitors the status of the printing activity on black and white printer 602. To report the status to service bus 122, service provider 612 transmits a JMF message back to service bus 122 indicating the status so that service bus 122 may monitor the overall status of the job. For example, service provider 612 may transmit a JMF message indicating when the printing activity has ended.

After the printing activity has been completed, the output from black and white printer 602 comprises printed pages for the instruction book. The next step in the workflow is to bind the printed pages. Because binder 604 is an offline device, the output from black and white printer 602 is not automatically sent to binder 604 as input. Thus, service bus 122 instructs the print shop operator to manually insert the printed pages in binder 604 - in other words, the human operator (a device) is instructed to execute the activity of inserting printed sheets into binder 604 to bind them. Service bus 122 also routes a JDF job ticket to service provider 614 (which is associated with binder 604).

FIG. 8 illustrates the messages exchanged between service provider 614 and service bus 122 in an exemplary embodiment of the invention. Service provider 614 receives the JDF job ticket from service bus 122. The JDF job ticket requests that service provider 614 execute a binding activity on binder 604 to bind the printed pages for the instruction book. Because binder 604 is an offline device, service provider 614 is not able to provide device-specific operational commands to binder 604. Instead, service provider 614 generates human-readable instructions which instruct the print shop operator how to configure and operate binder 604. The print shop operator then follows the instructions from service provider 614 to operate binder 604.

Service provider 614 also monitors the status of the binding activity on binder 604. Service provider 614 may rely on input from the print shop operator as the status of the binding activity (e.g., completed or not completed). Service provider 614 then transmits a JMF message back to service bus 122 indicating the status so that service bus 122 may monitor the overall status of the job. For example, service provider 614 may transmit a JMF message indicating when the binding activity has been completed.

After the binding activity has been completed, the output from binder 604 comprises bound, printed pages for the instruction book that have to be cut to the appropriate size. The next step in the workflow is to cut the bound, printed pages down to the desired size. Because cutter 607 is a near-line device, the output from binder 604 is not automatically sent to cutter 607 as input. Thus, service bus 122 instructs the print shop operator to manually insert the bound, printed pages in cutter 607. Service bus 122 also routes a JDF job ticket to service provider 617 (which is associated with cutter 607).

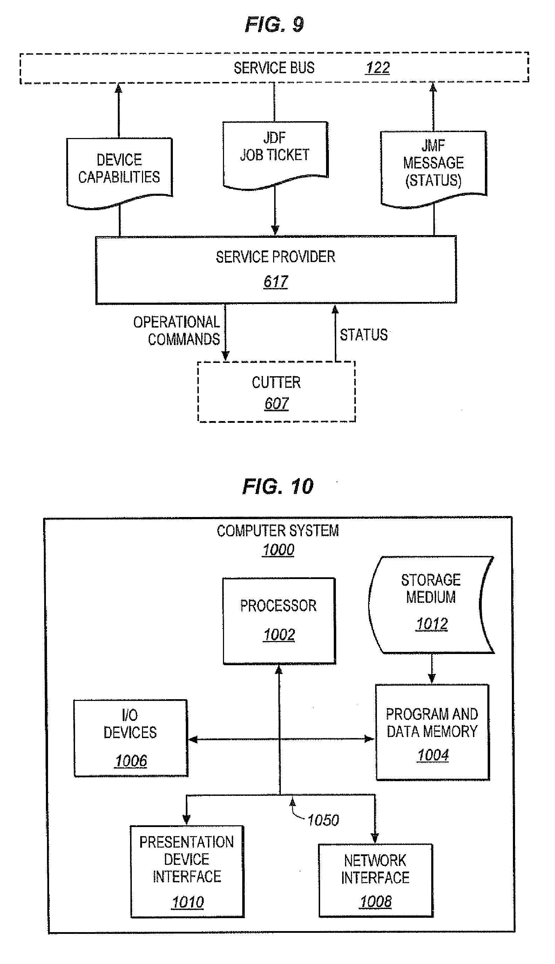

FIG. 9 illustrates the messages exchanged between service provider 617 and service bus 122 in an exemplary embodiment of the invention. Service provider 617 receives the JDF job ticket from service bus 122. The JDF job ticket requests that service provider 617 execute a cutting activity on cutter 607 to cut the bound, printed pages for the instruction book. Thus, service provider 617 converts the JDF job ticket into device-specific operational commands in the format compatible with cutter 607, and transmits the device-specific operational commands to cutter 607. Cutter 607 then executes the operational commands to cut the bound, printed pages.

Service provider 617 also monitors the status of the cutting activity on cutter 607. Service provider 617 transmits a JMF message back to service bus 122 indicating the status so that service bus 122 may monitor the overall status of the job. For example, service provider 617 may transmit a JMF message indicating when the cutting activity has been completed.

After the cutting activity has been completed, the output from cutter 607 comprises a completed, bound instruction book. Service bus 122 may then execute the job again to generate another copy of the instruction book as desired.

The print shop operator may manage or modify the job that is being executed in service bus 122. For instance, if black and white printer 602 encounters an error or becomes unavailable, then the print shop operator may modify the job to utilize black and white printer 603 instead. Service bus 122 then stores the modified job as a modified job ticket. Graphical Job Editor and Dynamic Capabilities Updating

FIG. 11 illustrates an exemplary system 1100 including a graphical job editor 202 according to an exemplary embodiment of the invention. Graphical job editor 202 may be implemented within a workflow processing architecture such as described above or may be implemented in a standalone structure that provides similar device information and associated device capabilities information. Graphical job editor 202 of FIG. 11 is operable to receive device information 1101 from any appropriate source of such information. As discussed above, the workflow processing system architecture may provide such a source for device information as well as associated device capabilities information (via the service bus). In a standalone embodiment of the system 1100, the source of such information may be any suitable source such as statically configured information regarding devices and device capabilities in a particular environment stored in a suitable file structure and/or interactive user input to request and receive information regarding devices and device capabilities in the environment.

Graphical job editor 202 interacts with a user through a suitable interactive user device 1102. Device 1102 may be, for example, a standard personal computer or workstation or any other suitable display device with interactive input devices associated therewith. Exemplary of such input devices are: a keyboard, a pointer device, voice recognition capabilities, and touch screen input capabilities, etc. Where the device 1102 is a computer system (e.g., personal computer or workstation) job editor 202 may operate on the same device and utilize the display and user input devices of that computer system for its user interaction.

Based on the device information and device capability information received by graphical job editor 202 and based on user interaction through device 1102, graphical job editor 202 generates a job ticket 1116 describing a job to be processed in the associated environment. In one exemplary embodiment, graphical job editor 202 may be utilized in a print shop to define a JDF job ticket. In other embodiments, the job ticket may define a job for processing in a generalized workflow processing system - i.e., for print shop operations or any other workflow.

Graphical job editor 202 may include device information interface 1104 for receiving information regarding devices and device capabilities from source 1101. As noted above when embodied within a workflow processing system architecture, interface 1104 may interact with the service bus to receive device information and associated device capabilities. Job editor 202 may also include user interface 1106 to interact with a user through device 1102. User interface 1106 generally presents each of the devices identified in the received device information on a display screen of device 1102. In addition, interface 1106 presents on the user's display screen the one or more activities that each device is capable of executing. Interface 1106 then interacts with a user to select activities of one or more selected devices in a defined order to thereby define a desired job. In addition, user interface 1106 interacts with a user through input devices associated with device 1102 to permit the user to select or define values for the various resources defined by the device capabilities (i.e., received information) associated with the selected devices defining the job.

As generally noted herein above, device capabilities for each device may include at least an input resource defining desired input for the selected activity of a selected, associated device and an output resource defining output generated by the selected activity when performed on the selected device. Linking module 1110 verifies that the job defined by the user as a sequence of activities to be performed by identified selected devices is valid and operable in the present environment. In particular, linking module 1110 verifies that the input resource of each selected activity comports with the output resource of the preceding activity in the sequence of activities that define the job. Thus linking module 1110 and user interface module 1106 cooperate to assure that the user defines a job that may be performed within the present environment. By contrast, prior job editor systems and processes permit a user to generate a job that may be impossible to perform in the present environment because particular activities of selected devices cannot practically be combined with other activities for requirements of a particular job. Graphical job editor 202 provides the user (through user interface 1106) only those devices and corresponding activities known to be available in the present environment and verifies that the input resources and output resources of the various selected activities comport with one another in the defined order.

Job generator 1112 receives the defined job following verification by linking module 1110 and generates a job ticket 1116 based on the defined order of activities defined by the user input through user interface 1106. The generated job ticket 1116 may then be utilized for processing the job represented therein. In the context of a print shop, the job ticket may represent a job to be processed within the print shop by utilization of the selected activities of the selected devices in the defined order within the print shop.

Further features of the job editor 202 include device capabilities update 1108 operable to modify a local copy 1114 of the device presently available and device capability information retrieved through device information interface 1104. Actual capabilities (e.g., permissible values to be associated with resources of particular activities of selected devices) may change dynamically based on the particular definition of a job. For example, the output from one activity of a selected device in a defined job may restrict an otherwise broader range of potential input resource values to a next activity in the defined job. Device capabilities update 1108 is operable in cooperation with user interface 1106, linking module 1110, and the local copy of the device and capability information 1114 to dynamically update information in the local copy 1114 based on the particular defined order of activities and devices selected by the user to define a new job.

For example, in the context of a print shop, job editor 202 could allow a user to select a folding activity on a folding machine device. The input resource to the folding activity may specify printed paper and the output resource of the folding activity may specify folded printed paper. A next device in a defined job could be a cutting device where a cutting activity is selected. The device may be capable of accepting paper (an input resource) in a particular weight range suitable for cutting. However, the paper generated as output from the folding activity of the folding device may have an effective weight of twice that of the input to the folding machine (i.e., if folded in half). Thus, the cutting device may be incapable of cutting the full range of paper weights it is normally capable of processing since each sheet of paper may be folded and thus have an effective weight of two or more times the nominal (unfolded) weight of the sheet of paper. Device capabilities update 1108 therefore serves to monitor the particular sequence of activities and devices in the defined job to update any device capabilities of an activity based on its particular ordering relative to other activities in the job.

Device capabilities update 1108 may be invoked to perform its update after a user has defined a complete job. In such a scenario, device capabilities update 1108 may further validate the defined job based on an update of the local copy of the device capabilities 1114 for the particular defined order of the selected activities. In addition or in the alternative, device capabilities update 1108 may be invoked in conjunction with user interface 1106 as a user interacts to add or remove an activity from a job being defined. For example, as user interface 1106 processes user input to add a new activity to the job, device capabilities update 1108 may then be invoked to modify any device capabilities that may be affected by the new combination of activities in the defined order of the job. In like manner, removal of an activity previously added to the job may be cause for device capabilities update 1108 to be invoked to restore or otherwise update capabilities based on the new defined order of the remaining selected activities in the job. Device capabilities update 1108 may thus validate or invalidate the particular selection based on these updated device capabilities.

Those of ordinary skill in the art will readily recognize that the modifications or updates performed on device capabilities are based on a local copy (e.g., a working copy) of the device capabilities 1114 as utilized by the bob editor in defining this particular job. An original or archival version of the normal device capabilities provided by source 1101 will remain unchanged such that this or other job editors may utilize the same initial device capability information when commencing construction of their respective jobs. In particular, in the context of the earlier described workflow processing architecture, the service bus retains the original device capabilities regardless of how the job editor 202 updates its local copy 1114 to define a job.

As noted above, device capability information may be provided as textual information such as may be encoded in a markup language including, for example, Extensible Markup Language (XML). In general, device capability information includes: a name of a device, the name of one or more activities provided by the named device, and resources associated with one or more of the activities provided by the device. A device may provide only a single named activity. For example, in the context of a print shop, a cutter device may be capable of providing only a single activity - namely cutting. A folding device may provide a single activity - namely folding. By contrast, a multifunction device in the context of a print shop may be capable of providing multiple activities including, for example, printing, copying, scanning, etc.

For each activity provided by a device a plurality of resources may be defined. For example, an input resource and an output resource should be defined for each activity provided by a device to define the input(s) required for the activity and the output(s) generated by the activity. Various other resources may be defined to characterize other operating parameters or features of the device. The input resource(s) defines the parameters of the input utilized for processing by this activity of this device while the output resource(s) defines parameters of the output generated by processing of this activity of this device.

In the context of a print shop operation, the exemplary XML device capability description below defines a "Print" activity of a printing device named "Printer #2".

| | |
|---|---|
| 0001 | <Device Name="Printer #2"> |
| 0002 | <Activity Name="Print"> |
| 0003 | <Inputs> |
| 0004 | <Resource Name = "FileToPrint" /> |
| 0005 | <Resource Name = "NumberOfCopies" /> |
| 0006 | <Resource Name = "Paper"> |
| 0007 | <String Name = "Size" |
| 0008 | LegalValues = "Letter 11x14 11x17" |
| 0009 | DefaultValue = "Letter" /> |
| 0010 | <Integer Name = "Weight" |
| 0011 | LegalValues = "20 40 80 120 140 250" |
| 0012 | DefaultValue = "20" /> |
| 0013 | <Boolean Name = "Glossy" |
| 0014 | LegalValues = "On Off" |
| 0015 | DefaultValue = "Off" /> |
| 0016 | </Inputs> |
| 0017 | <Outputs> |
| 0018 | <Resource Name = "Paper" /> |
| 0019 | </Outputs> |
| 0020 | </Activity> |
| 0021 | </Device> |

Those of ordinary skill in the art will readily recognize the hierarchical nature of the exemplary XML listing where a "device" includes an "activity" which, in turn, includes "input" and "output" resources. Lines 0003 through 0016 in the exemplary device capability listing above define input resources for the "Print" activity of device "Printer #2". Lines 0017 through 0019 define output resources for the same activity of the same device. The lists of input and output resources for this Print activity on this exemplary Printer #2 both describe a resource named "Paper". In other words, this activity on this device receives paper as input and generates paper as output. In addition, various other input resources are listed. For example, "FileToPrint" is a named resource of the input device capability as is "NumberOfCopies". Both are resources that may be defined in the list of input resources of the Print activity of device Printer #2. Still further, the "Paper" resource has three attributes that may be assigned values by a user. A "Size" attribute shown as having three potential LegalValues ("Letter", "11x14", and "11x17") as well as a DefaultValue of "Letter". A "Weight" attribute having six potential LegalValues (20, 40, 80, 120, 140, and 250) and an associated default value of 20. A "Glossy" attribute having two potential LegalValues (On or Off) and an identified default value (Off).

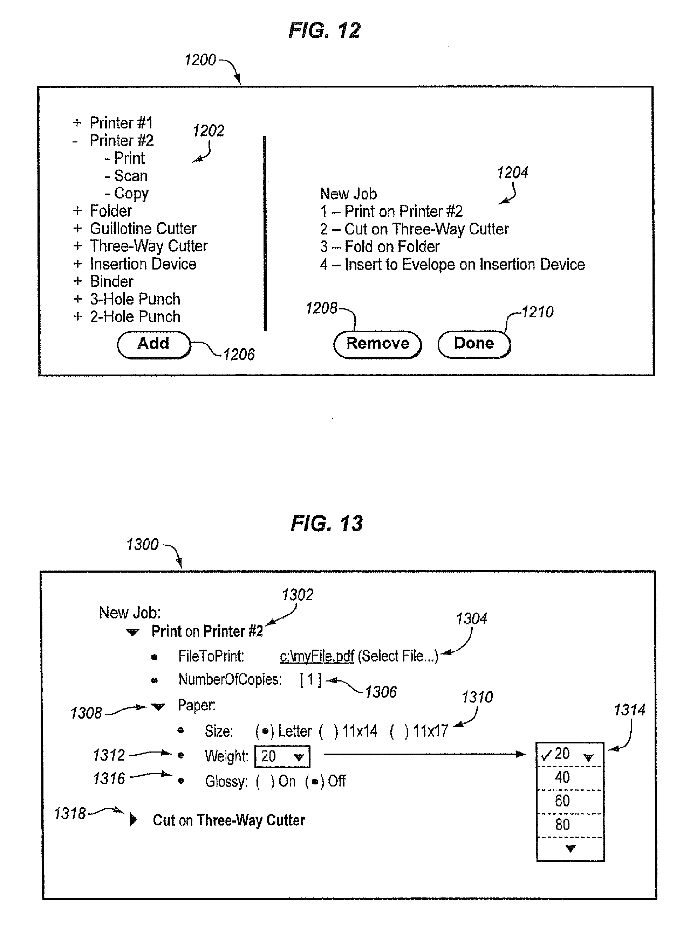

This exemplary device capability description presents one exemplary activity for one exemplary device such as may be found in a print shop. Any number of activities may be defined within each of any number of devices for a particular environment. The graphical job editor may receive device capability descriptions for all devices, activities, and resources defined in the present environment (e.g., in the print shop). The graphical job editor may then present all identified devices and their respective activities and resources to the user through the interactive user interface and receive user input to select the desired activities in a defined order to thus define the desired job to be performed. FIG. 12 presents an exemplary display screen image 1200 wherein all known devices in an exemplary print shop are presented for the user to select. A user may select among those displayed devices to create a new job utilizing selected devices in a defined order (e.g., the order in which they are selected). Exemplary display 1200 shows a list of available devices 1202 suggesting an exemplary print shop with two printers, and various finishing devices for cutting, folding, inserting, binding, and hole punching. In one exemplary embodiment, each device may be "expanded" to show the available activities that the device is capable of executing. For example, "Printer #2" is shown expanded with three activities available ("Print", "Scan", and "Copy"). Through the graphical user interface of the job editor, a user may select an activity from the list 1202 and click the "Add" button 1206 to add the selected activity to the next position in order for the new job being defined 1204. If the user mistakenly added an activity, "Remove" button 1208 may be utilized to delete an activity previously added. "Done" button 1210 may be utilized for the user to indicate that the new job has been completely defined and, if valid, a corresponding job ticket may be generated.

Any of several well-known graphical interface and techniques may be utilized for selecting activities to be added to a new job, for removing activities previously added to a new job, and for re-ordering the activities in a newly defined job. For example, in addition to the depicted "Add" and "Remove" buttons (1206 and 1208), a user may "drag and drop" a new activity from the list 1202 of available activities and devices onto the ordered list of selected activities defining a new job 1204. Similar "drag and drop" techniques may be used to remove a previously added activity from the new job 1204 or to re-order activities previously added to the newly defined job 1204. Numerous such graphical user interface techniques will be readily apparent to those of ordinary skill in the art.

For each activity added to a newly defined job, values may be defined for one or more device capabilities associated with a particular selected activity of a selected device. Again, in the context of a print shop, a printer device may provide numerous device capabilities (attributes) useful to define operation of the printing device. As noted, every device preferably includes at least an input device capability and an output device capability defining attributes of the input to be applied to the selected activity of the device and the output generated by processing of a selected activity of the device. The user may utilize well-known graphical interface techniques to define device capabilities of the selected devices. For example, a selected device in the list of the newly defined job 1204 may be "double clicked" or "right clicked" to provide a screen suitable for user input to define attributes of the various device capabilities for the selected device.

As shown in FIG. 12, a user has defined a sequence of activities as a new job. The activities include (in order), "Print on Printer #2" then "Cut on Three-Way Cutter", the "Fold on Folder", then "Insert to Envelope on Insertion Device". In one exemplary embodiment, each such selected activity may be expanded (e.g., by "double clicking") to view and modify the values of resources and attributes associated with the activity. FIG. 13 shows an exemplary display screen 1300 for presenting a user with resource and attribute values of a selected activity of the defined job. Through such a user interface screen a user may provide user input to alter the values of various displayed resources and attributes of a selected activity. For example, consider the above-described exemplary (XML) device capabilities of a printing device named "Printer #2" and the "Print" activity on "Printer #2" (1302). The "FileToPrint" 1304 resource allows a user to enter a file name identifying a document to be printed. Multiple such file names may be defined to provide multiple files to be printed or the user input to the "FileToPrint" resource may provide a list of files in a defined order to be printed. The "NumberOfCopies" 1306 resource allows a user to enter a desired number of copies of the file(s) to be printed. The "Paper" resource 1308, as described above, includes a number of attributes by which the user may define the type of paper media to be used as input to the "Print" activity on "Printer #2". The paper "Size" attribute 1310 provides an enumerated list of possible legal values for the attribute. Such an enumerated list may be displayed to the user as shown as a series of "check boxes" or "radio buttons" to select one of the potentially legal values. In like manner, the paper "Weight" attribute 1312 provides another enumerated list of values that may be displayed as a "drop down list" or "menu" 1314. The "Glossy" attribute 1316 also shows a radio button display of the potential legal values for selection of one of its multiple enumerated values. A particular format for display and input of resource and attribute values may be selected based upon the particular type of data and the particular form for specifying potential legal values. Further, it will be noted that in each of the attributes of the Paper resource (Size, Weight, and Glossy) a DefaultValue was defined by the exemplary device capability information and the specified DefaultValue is provided to the user as an initially checked radio button or initially selected paper weight.

Referring again to the device capabilities update features discussed above, a range or plurality of otherwise legal values for a device capability may be reduced due to the affect of another activity in the defined order. For example, the number or range of permissible values for an input resource of a cutter device may be reduced because a particular job adds the cutting activity to a job after a folding activity. With reference to FIG. 13, the drop down list or menu 1314 could be shortened after such an update to the device capabilities of the cutter device to eliminate some previously permissible paper weight attribute values that are no longer practical for a particular job being defined. Or, for example, some displayed, enumerated, legal, attribute values for paper size could be eliminated when the device capabilities update module determines that a particular ordering of activities in a job eliminates one or more possible paper sizes.

Still further, a wide variety of types of data may be presented based on the definitions for resources and attributes in the device capabilities information for a selected device. For example, a default resource value to be used as the resource or attribute value in the absence of user input specifying the resource or attribute value. Legal values may be specified as an enumerated list of permitted values such that the user input selects the resource or attribute value from among the permitted values. Or, a range of permitted values may be specified wherein the user input defines the resource or attribute value from the range. Still further a regular expression mask defining permitted character strings to be assigned as the resource or attribute value may be specified wherein the user input defines the value as a character string matching the regular expression mask. Still further the data values may be any of several basic data types including, for example, a numeric value field; a numeric range field; a date value field; a date range field; a plain text field; enumerated lists of potentially legal values; etc.

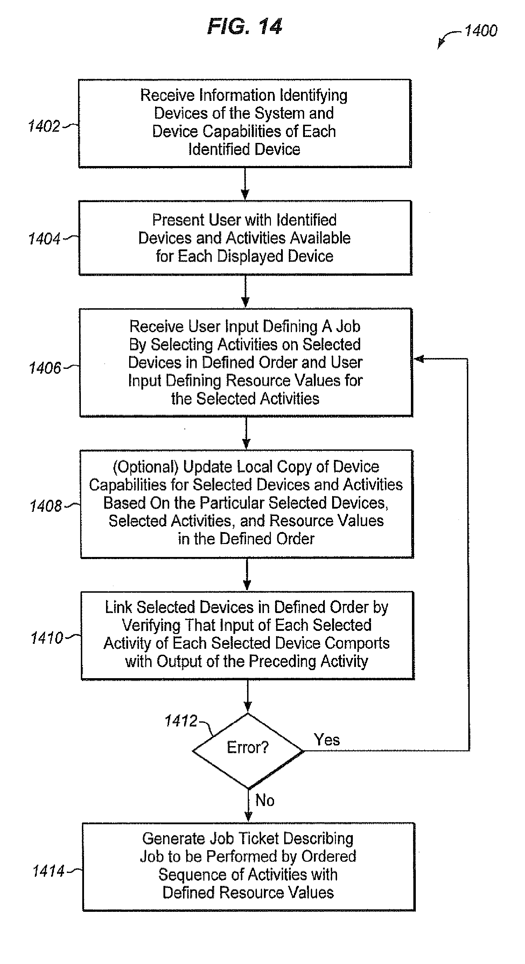

FIG. 14 is a flowchart describing an exemplary method 1400 in accordance with an exemplary embodiment of the invention for processing by a job editor (202) to generate a job ticket (1116) utilizing graphical user interaction (1102) based on device capabilities (1101). Step 1402 receives information identifying devices of the system as well as information identifying device capabilities (activities, resources, and attributes) of each of the identified devices. As noted above, the device capability information for each device includes at least one activity that may be performed by the device. Each activity may, in turn, specify one or more resources associated therewith. Typically, an activity includes at least one input resource indicating inputs required for the activity and at least one output resource indicating the output generated by execution of the activity. Step 1404 then displays the identified devices and respective activities to a user and step 1406 receives interactive user input defining a job by the user selecting activities to be performed from the displayed list in a defined order (the order in which the user selects the activities or any other order defined by the user's input). The user input also defines any desired resource and attribute values for the selected activities. For example, where the input resources of an activity may provide numerous options for input, step 1406 permits the user input to define desired values for each resource or attribute that the user does not want to default.

In one exemplary embodiment of the invention, step 1408 optionally updates a stored local ("working") copy of the device capability information for the selected devices and activities based on other activities in the defined order of the job. As noted above, input or output resources of an activity may be modified based on other activities that provide input to a newly selected activity or utilize the output of a newly selected activity. Thus step 1408 modifies the working copy of device capabilities for the devices and activities selected for the job to reflect such dynamic changes resulting from a particular combination or ordering of activities in the job.

Step 1410 then links the selected devices in the defined order by verifying that the input of each activity of the job comports with the output of any preceding activity. In other words, the inputs and outputs of each activity in the defined order of the job as selected by the user must be determined to be compatible such that the job will be operable to provide the desired output of the job. Step 1412 then determines whether the linking step 1410 detected an error in the compatibility of inputs and outputs of sequential activities of the job as defined by the user. If step 1412 detects an error, processing returns to step 1406 to receive further user input to further define the job or to redefine the job. If step 1412 detects no error in the sequence of activities and compatibility of their corresponding input and output device capabilities, step 1414 generates a job ticket describing the job to be performed as the ordered sequence of activities each with its respective defined device capability values. Those of ordinary skill in the art will also recognize that the error checking of steps 1410 and 1412 may be performed as a part of the user input processing of step 1406. In other words, as a user selects activities in a defined order, the job editor may validate that the inputs and outputs of the newly reordered activities remains compatible. An invalid attempt to add a new activity to the job may thereby be detected and rejected earlier in the process as the method interacts with the user.

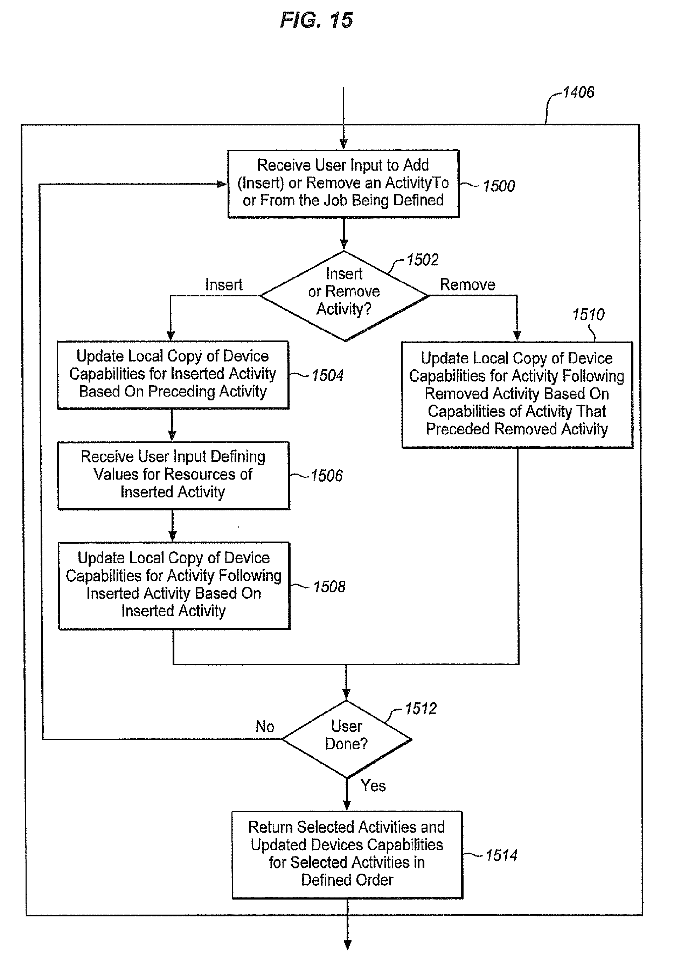

FIG. 15 is a flowchart describing additional details of processing of step 1406 in an exemplary embodiment of the invention. Step 1500 receives user input requesting addition or removal of an activity in the job being defined. If step 1502 determines that the user requested adding an activity to the job, processing continues at step 1504. For removal of an activity from the sequence of activities presently defined for the job, processing continues at step 1510

To add a new activity to a job, step 1504 updates a local, working copy of the device capabilities for the selected activity based on the particular activity that precedes this new activity and based on the updated device capabilities of that preceding device and activity. Step 1506 then receives user input defining values for resources and attributes of the selected activity to be added. Step 1508 then updates the local, working copy of device capabilities for the activity (if any) the follows the newly added activity in the defined order of the job based on the updated capabilities of the newly added (inserted) activity. In particular, processing of step 1504 may be further operable to update the local copy of the device capabilities of all activities and devices that precede the inserted activity to whatever extent such updates may "ripple upstream" to other preceding activities and/or devices already defined in the job. In like manner, step 1508 is further operable to update the local, working copy of device capabilities of all activities (if any) that follow the inserted activity to whatever extent such updates may ripple downstream from one updated activity to the next. Step 1512 determines whether the user indicates completion in defining the new job. If the user input indicates a completed definition of all activities in the job, step 1514 completes the definition of the job returning the selected activities in the defined order with all device capabilities updated (in the local, working copy thereof). If step 1512 determines that the user is not yet done defining a job, processing continues looping back to step 1500 to receive further user input selecting yet more activities for the job or removing other activities therefrom.

Responsive to detecting a request to remove a device at step 1502, step 1510 updates the local, working copy of the device capabilities for all activities affected (upstream or downstream in the defined order of the job). Processing then continues at step 1512 as discussed above to determine if the job has been completely defined. Conclusion

Embodiments of the invention can take the form of an entirely hardware embodiment, an entirely software embodiment or an embodiment containing both hardware and software elements. In one embodiment, the invention is implemented in software, which includes but is not limited to firmware, resident software, microcode, etc. FIG. 10 is a block diagram depicting a computer system 1000 adapted to provide features and aspects hereof by executing programmed instructions and accessing data stored on a computer readable storage medium 1012.

Furthermore, embodiments of the invention can take the form of a computer program product accessible from a computer-usable or computer-readable medium 1012 providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A computer system 1000 suitable for storing and/or executing program code will include at least one processor 1002 coupled directly or indirectly to memory elements 1004 through a system bus 1050. The memory elements 1004 can include local memory employed during actual execution of the program code, bulk storage, and cache memories which provide temporary storage of at least some program code in order to reduce the number of times code must be retrieved from bulk storage during execution.

Input/output or I/O devices 1006 (including but not limited to keyboards, displays, pointing devices, etc) can be coupled to the system either directly or through intervening I/O controllers. Network adapter interfaces 1008 may also be coupled to the system to enable the computer system 1000 to become coupled to other data processing systems or storage devices through intervening private or public networks. Modems, cable modems, IBM Channel attachments, SCSI, Fibre Channel, and Ethernet cards are just a few of the currently available types of network or host interface adapters. Presentation device interface 1010 may be coupled to the system to interface to one or more presentation device such as printing systems and displays for presentation of presentation data generated by processor 1002.

Although specific embodiments were described herein, the scope of the invention is not limited to those specific embodiments. The scope of the invention is defined by the following claims and any equivalents thereof.

## Claims

1. A graphical job editor (202) operable in a computer system, the editor comprising:
a device interface (1104) operable to receive information (1101) identifying devices and to receive a copy of device capabilities of each identified device wherein the device capabilities for an identified device includes activities that may be performed by the identified device and includes an input resource indicating input required for a corresponding activity of the identified device and includes an output resource indicating output generated by a corresponding activity of the identified device;
a user interface (1106) operable to display a graphical representation of the activities offered by each identified device and operable to receive user input defining a job comprising a plurality of the displayed activities of one or more identified devices, the plurality of the displayed activities being in a defined order in the defined job responsive to user input;
a linking module (1110) coupled to the user interface to receive the defined job and operable to verify that the output resource of a device activity comports with the input resource of the next device activity in the defined order; and
a job generator (1112) coupled to the linking module to generate and output a job ticket (1116) representing the defined job in response to verification of the job by the linking module.

2. The editor of claim 1 further comprising:
a device capabilities update module operable to modify the received copy of device capabilities for a device in the defined job based on activities in the defined job.

3. The editor of claim 2
wherein the device capabilities update module is operable to modify the input resource of an activity of the defined job based on the output resource of the preceding activity of the defined job.

4. The editor of claim 2
wherein the device capabilities update module is operable to modify the output resource of an activity based on the input resource of the preceding activity of the defined job.

5. The editor of claim 2
wherein the device capabilities update module is communicatively coupled to the user interface and operable in response to the user input to add a new activity to the defined job.

6. The editor of claim 2
wherein the device capabilities update module is communicatively coupled to the user interface and operable in response to the user input to remove a previously added activity of the defined job.

7. The editor of claim 2
wherein the input resource of an activity of the defined job defines a range of permitted values, and
wherein the device capabilities update module is operable to reduce the range of permitted values based on a preceding activity of the defined job.

8. The editor of claim 2
wherein the input resource of an activity of the defined job defines multiple permitted values, and
wherein the device capabilities update module is operable to eliminate at least one of the permitted values based on a previous activity of the defined job.

9. The editor of claim 1
wherein the device capabilities of a device are encoded in a markup language, and
wherein the device capabilities includes entries in the markup language including:
an activity name for each activity associated with the device;
a resource name for each resource associated with each activity;
an element name for each element associated with each resource; and
an attribute name for each attribute associated with each element,
wherein the user interface is further operable to receive user input specifying an attribute value for the corresponding attribute name.

10. A print shop workflow architecture system (100), comprising:
a service bus (122);
service providers (111, 112, 113, 114) communicatively coupled to the service bus wherein each service provider is associated with a corresponding device of a plurality of devices (101, 102, 103, 104) in a print shop; and
a workflow front end (132) coupled to the service bus, the service providers operable to report device capabilities of their associated device to the service bus,
the service bus operable to receive the device capabilities from the service providers and operable to provide a copy of the device capabilities for the devices in the print shop to the workflow front end, wherein the device capabilities for an device includes activities that may be performed by the device and includes resources including an input resource indicating input required for a corresponding activity of the device and including an output resource indicating output generated by a corresponding activity of the device,
the workflow front end operable to receive the device capabilities from the service bus,
wherein the workflow front end includes a job editor module comprising:
a user interface operable to display a graphical representation of the activities offered by each device and operable to receive user input defining a job comprising a plurality of the displayed activities of one or more devices, the plurality of the displayed activities being in a defined order in the defined job responsive to user input;
a linking module coupled to the user interface to receive the defined job and operable to verify that the output resource of a device activity comports with the input resource of the next device activity in the defined order; and
a job generator coupled to the linking module to generate and output a job ticket representing the defined job in response to verification of the job by the linking module.

11. A method for generating a job ticket for a job in a workflow processing system, the method comprising:
receiving information identifying devices in the system;
receiving device capabilities of each identified device in the system wherein the device capabilities of each identified device includes activities that may be performed by the identified device and includes resources including an input resource indicating input required for a corresponding activity of the identified device and including an output resource indicating output generated by a corresponding activity of the identified device;
displaying graphical representations of each identified device, the activities it can perform, and resources associated with each activity;
receiving user input to define a job as a plurality of activities to be coupled in a defined order and to define values for resources associated with each activity of the defined job;
linking activities according to the defined order by verifying that the output resources of an activity comport with the input resources of the next activities of the defined job; and
generating a job ticket, responsive to linking of the job, the job ticket describing the job to be processed by the workflow processing system.

12. The method of claim 11 further comprising:
updating, prior to linking, a copy of the device capabilities of devices identified in the job based on the defined order of activities comprising the job.

13. The method of claim 12
wherein the step of updating is performed in response to user input as each activity is selected in defining the job.

14. The method of claim 13
wherein the step of updating further comprises:
modifying a resource of an activity based on a resource of a preceding activity.

15. A method operable in a print shop with a workflow architecture system (100), the system comprising: a service bus (122), service providers (111, 112, 113, 114) coupled to the service bus wherein each service provider is associated with a corresponding device of a plurality of devices (101, 102, 103, 104) in the print shop, and a workflow front end coupled to the service bus, the workflow front end including a job editor, the method comprising the steps of:
transferring device capabilities from the service provider of each device to the service bus, wherein the device capabilities of each device includes activities that may be performed by the device and includes resources including an input resource indicating input required for a corresponding activity of the device and including an output resource indicating output generated by a corresponding activity of the device;
transferring a copy of the received device capabilities from the service bus to the job editor of the workflow front end;
displaying, by operation of the job editor, the devices and device capabilities of each device;
receiving user input in the job editor to select activities in a defined order to define a job and to define values of attributes of the resources required by the chosen activities of the selected devices;
linking the selected activities according to the defined order by verifying that the output resources of an activity comport with the input resources of the next activity or activities in the defined order;
generating a Job Definition Format (JDF) job ticket, responsive to linking of the job, describing the job to be processed; and
transmitting the job ticket to the service bus to process the job and generate printed output according to the job ticket.
